# EUROPEAN PATENT APPLICATION

(11) **EP 4 261 079 A1**
(43) Date of publication of application: **18.10.2023**
(21) Application number: 22199459.3
(22) Date of filing: 04.10.2022
(51) Int. Cl.: B60N 2/24, B60N 2/015, B64D 11/06, B61D 33/00

(54) **SEATING SYSTEM INSTALLABLE ON TRANSPORT MEANS, TRANSPORT MEANS EQUIPPED WITH SAID SEATING SYSTEM, AND INSTALLATION METHOD OF SAID SEATING SYSTEM ON A TRANSPORT MEANS**

(30) Priority: 15.04.2022 IT 202200007637
(71) Applicant: Clerprem S.p.A., 36010 Carre (VI) (IT)
(72) Inventor: CENGHIALTA, Andrea, I-36010 Carrè, VICENZA (IT)
(74) Representative: Zanettin, Gianluigi

(57) **Abstract**

The present invention refers to a seating system (1) installable on transport means comprising: - a base (10) intended to be anchored to the transport means on the floor and/or a wall of said means; and one or more seats (21, 22) which may in turn be anchored to the base (10) by connection means (31, 41) interposed between the base (10) and each of said one or more seats (21, 22). Said connection means are quick-release coupling means (31, 41).

## Description

### Field of application

The present invention relates to a seating system that may be installed on transport means, a transport means equipped with said seating system, and a method of installing said seating system on a transport means.

Advantageously, the seating system according to the invention is intended to be installed especially on public transport means, such as trains, subways, trams, buses, coaches, airplanes, etc.

### Prior art

In general, a seating system installable on transport means comprises:
- a base intended to be anchored to the transport means on the floor and/or on a wall of said means;
- one or more seats anchored in turn to the base.

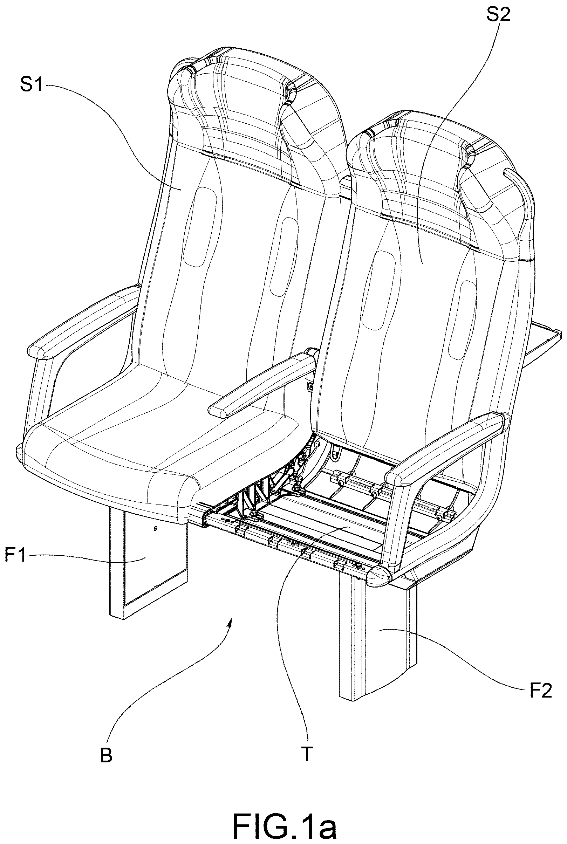

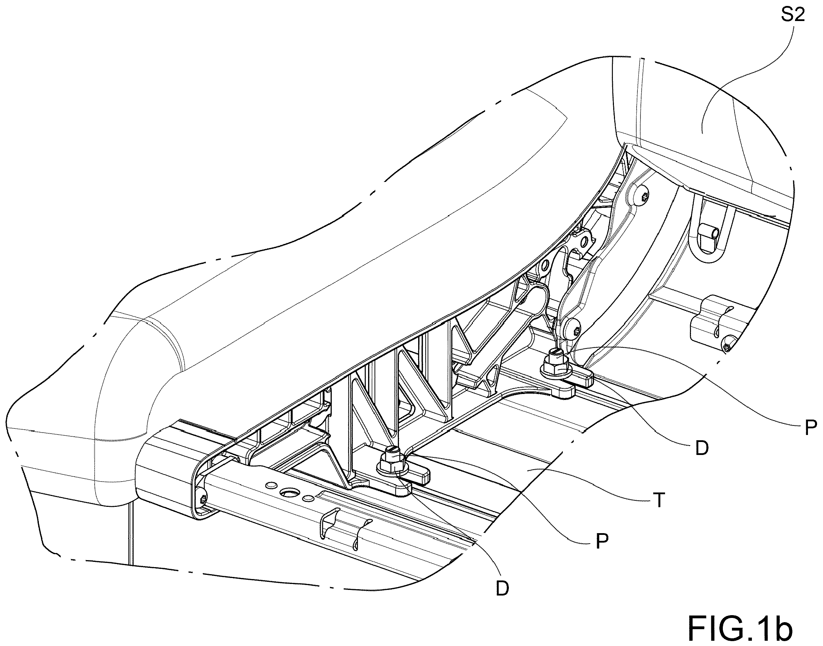

Fig. 1a shows a traditional type of seating system with two seats S1 and S2 anchored to a base B. In particular, the base B consists of two support feet F1 and F2 connected to each other by a horizontal beam T. The two seats S1 and S2 are anchored to the horizontal beam T at their base portion by a fastening system with a stud P and nut D, as shown in detail in Fig. 1b.

In general, in traditional seating systems, seats are stably anchored to the base by screws, bolts, or rivets. In fact, such fastening means provide the seat with high anchoring stability. This feature is critical because a seat, particularly one with a backrest, may be subjected during its life to very intense cyclic stresses that are discharged on the fastening means for fixing to the base.

It is therefore apparent that the operations for anchoring the seats to the base are critical and must be carried out with special care.

For this reason, traditionally, in order to ensure stable and secure anchorage of the seats to the base, this operation is never carried out on board the transport means, but rather directly at the production site of the seating system. It follows that the installation of a seating system on board a transport means only involves anchoring the base to the floor and/or wall of the transport means, as the seats are already anchored to said base.

At present, seating systems for transport means are then delivered to the end customer already fully assembled. Operationally, the customer extracts the already assembled seating system from the container, box or rack used to transport the system from the production site to the installation site, and, by manual transport by two or more persons or by means of a trolley, it is brought on board the transport means. It is then fixed to the floor and/or to the wall of the transport means.

Generally, the seating systems intended to be installed in the train cars comprise one, two or three seats, and in some cases more than three seats. As a result, generally the seating systems to be installed in the train cars are very heavy and bulky. Their transport inside the cars is thus difficult due to their bulk and weight, with the operation requiring two or more operators; the same applies to the installation. However, these operational limitations have so far been accepted in the face of the advantage of having a seating system already fully assembled, i.e., with seats already anchored to the base for the reasons mentioned above.

However, there still remains a strong need to simplify the transport and installation of said seating systems within transport means, but without compromising the anchorage stability of the seats to the base.

### Disclosure of the invention

Therefore, the main object of the present invention is to eliminate all or part of the drawbacks of the aforementioned prior art by providing a seating system installable on transport means and that may simplify transport and installation operations with respect to similar seating systems, without compromising the stability of anchoring the seats to the base.

A further object of the present invention is to provide a seating system installable on transport means which is simple and cost-effective to manufacture.

### Brief description of the drawings

The technical features of the invention, according to the aforesaid objects, may be clearly seen in the contents of the claims below, and its advantages will become more readily apparent in the detailed description that follows, made with reference to the accompanying drawings, which represent one or more purely exemplifying and non-limiting embodiments thereof, wherein:
- Fig. 1a is a perspective view of a traditional seating system with some parts removed to better illustrate others;
- Fig. 1b is an enlarged detail of the seating system in Fig. 1a;
- Fig. 2 is a perspective view of a seating system according to a preferred embodiment of the invention, illustrated in a partially disassembled condition;
- Fig. 3 is an orthogonal elevation view of the seating system illustrated in Fig. 2, shown in the completely disassembled condition;
- Fig. 4 is an exploded perspective view of a component of quick-release coupling means that are present in the seating system according to the invention illustrated in Fig. 2 and 3 and that connect the seats to the base;
- Fig. 5 is an orthogonal view of the base of the seating system of Fig. 2;
- Fig. 6 is an orthogonal, lateral, cross-sectional view of a seat in the seating system illustrated in Fig. 3, according to the sectional plane VI - VI indicated therein;
- Fig. 7 is a perspective view of the seating system illustrated in Fig. 3 from the bottom of the seat;

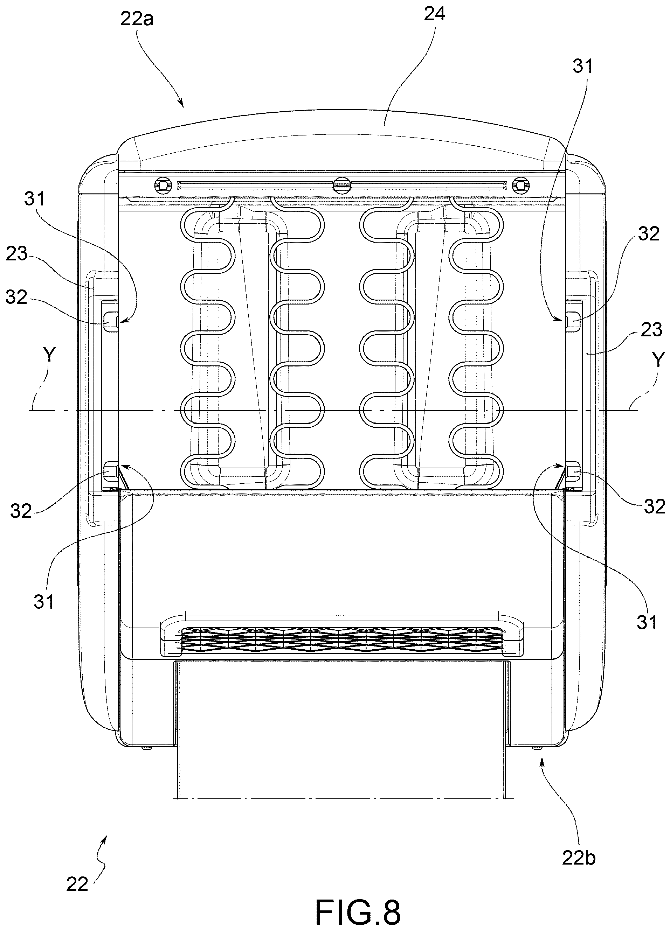

- Fig. 8 is an orthogonal view from the bottom of the seat illustrated in Fig. 7;

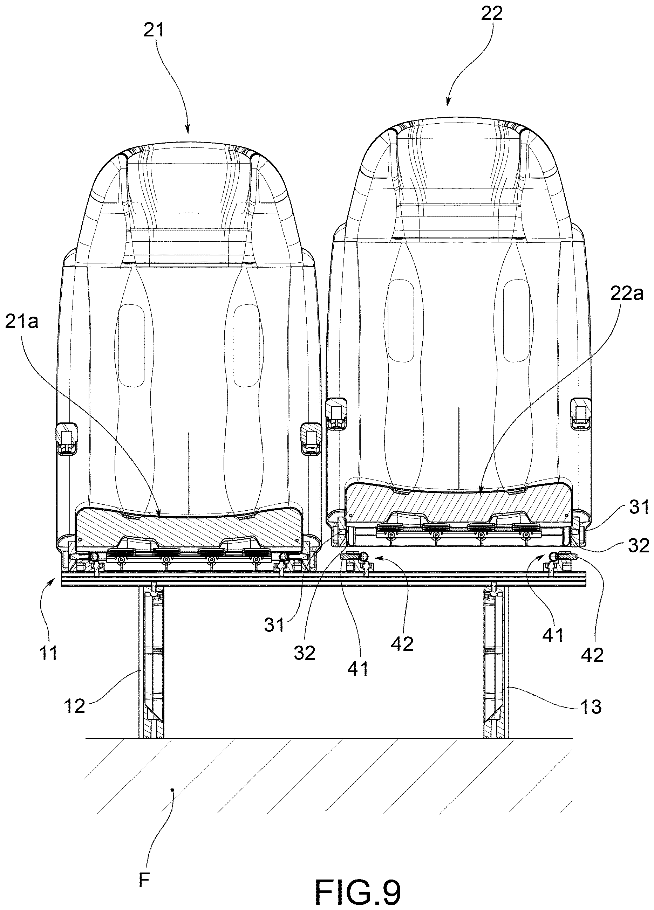

- Fig. 9 is an orthogonal, cross-sectional view of the seating system illustrated in Fig. 2, with one seat shown anchored to the base and another seat shown unanchored to the base, according to the sectional plane IX - IX shown therein;
- Fig. 10 is an enlarged detail of the seating system in Fig. 9 relative to the seat unanchored to the base;
- Fig. 11 is the same enlarged detail of the seating system in Fig. 9, illustrated, however, with the unanchored seat in partial connection with the base by quick-release means; and
- Fig. 12 is the same enlarged detail of the seating system in Fig. 9, illustrated, however, with the seat which, from the unanchored condition, has reached the connected condition via quick-release means.

### Detailed description

The seating system installable on transport means according to the invention has been indicated as a whole with reference numeral 1 in the accompanying figures.

According to a general embodiment of the invention, the seating system 1 comprises:
- a base 10 intended to be anchored to the transport means on the floor F and/or on a wall of said means;
- one or more seats 21, 22 which may in turn be anchored to the base 10 by connection means 31, 41 interposed between the base 10 and each of said one or more seats 21, 22.

According to the invention, said connection means are quick-release coupling means 31, 41.

"Quick-release coupling means" refers to all connection means that do not consist of screws, bolts or rivets and that are quickly movable between a coupling position and release position, without the use of tools.

The quick-release coupling means are configured so that both the coupling position and the release position are mechanically predefined and in fact are not subject to variability due to the user. This ensures anchorage stability at all times, which is independent of the intervention of the assembly worker and is contingent only on obtaining the coupling position. In other words, once the coupling position is obtained, the same anchorage level, established at the sizing stage, is always ensured; in the case of incorrect positioning of the quick release coupling means, the anchorage is simply not obtained. On the other hand, the connection offered by means of screws, bolts and/or rivets is contingent on the correct placement of the connection means and the correct use of the tools by the operator. Partial or imperfect anchorage situations may therefore occur, often undetectable by the operator.

As a result of the invention, and in particular the use of quick-release coupling means between the base and the seats, it is then possible to break down the seating system 1 into several modules, each of which has a weight and bulk that is a fraction of the overall system. The single module (either the base or the single seat) is therefore lighter, more manageable, and less bulky than the fully assembled seating system.

Operationally, the seating system 1 according to the invention may then be carried on board the transport means divided into several modules (base and seats). Once on board the transport means, the different modules may be easily assembled together.

In particular, as a result of the invention, it is possible to install the base on board the transport means separately from the seats. Once the base has been anchored to the transport means, the operations of anchoring the seats to the base may be carried out quickly and optimally due to the presence of the quick-release coupling means.

Thus, the seating system 1 installable on transport means according to the invention makes it easier to transport and install with respect to similar seating systems, without compromising the anchoring stability of the seats to the base.

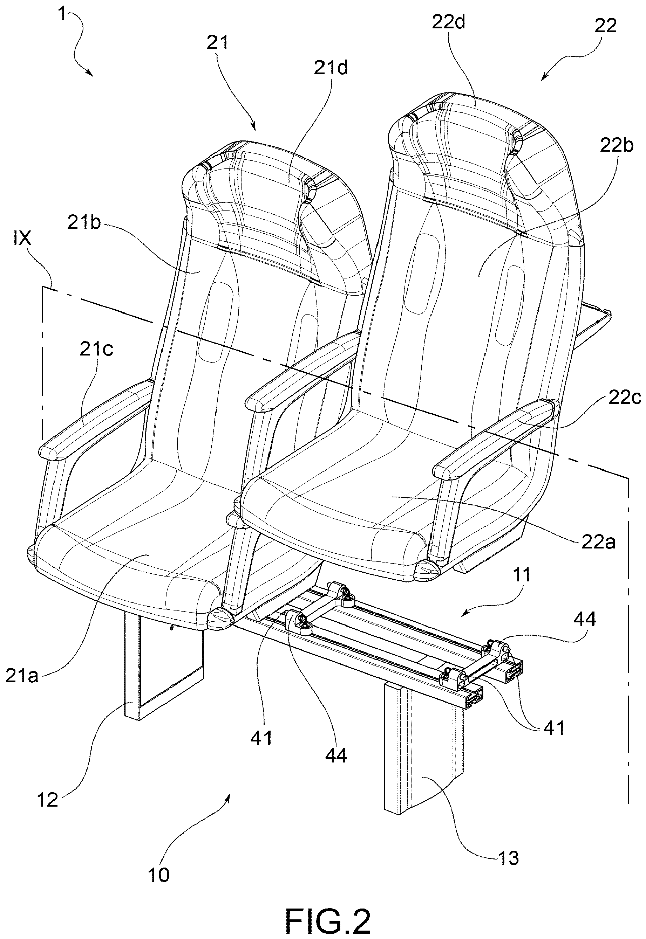

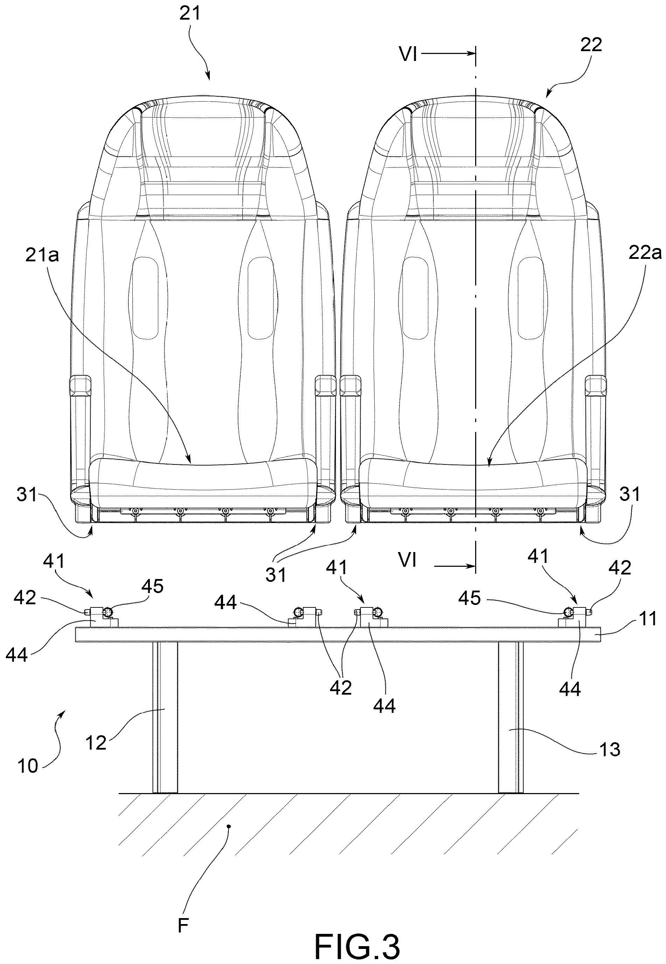

According to a preferred embodiment illustrated in the attached figures, and in particular in Fig. 2 and 3, the base 10 comprises a beam 11 intended in use to be arranged horizontally so as to define a horizontal support plane for said one or more seats 21, 22. The beam 11 may be made as a single piece, or (as shown in the attached figures) be comprised of two bars 11' and 11" connected together transversely.

As shown specifically in Fig. 3, the beam 11 may be supported by two feet 12 and 13, at which the base is anchored to the floor F of the transport means. Alternatively, the beam 11 may be supported by a single foot (not shown in the attached figures). According to a further alternative, not shown in the attached figures, the beam 11 may be anchored cantilevered to a wall of the transport means. According to a further alternative, not shown in the attached figures, the beam 11 may be anchored to the wall at one end and be supported by a foot at the opposite end.

Each of said one or more seats 21, 22 comprises at least one seating portion 21a, 22a at which said seat may be anchored to said beam 11. Each seat 21, 22 may also be equipped with a backrest 21b, 22b, as well as armrests 21c, 22c and possibly also a headrest 21d, 22d.

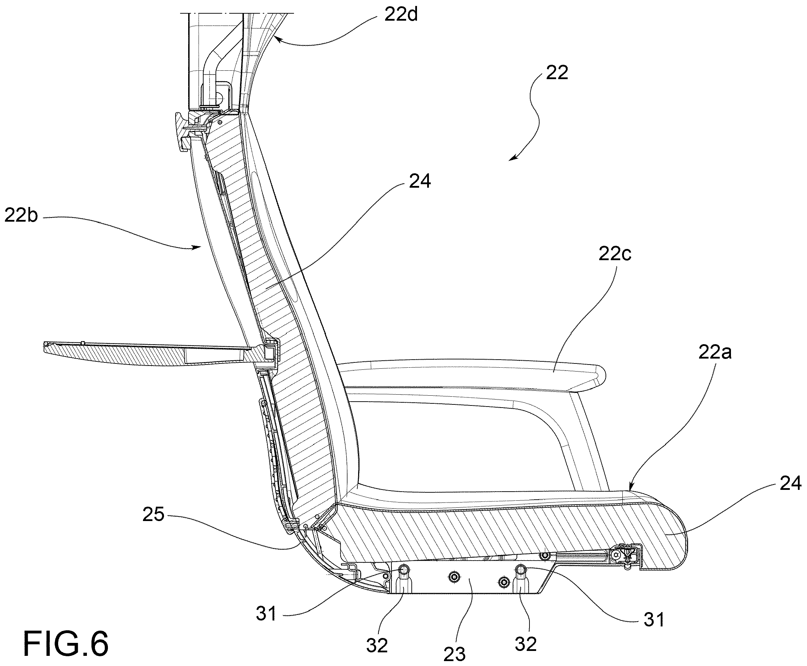

Preferably, as illustrated particularly in Fig. 6, each seat comprises a support structure 23 with which the padding 24 of the seat and back is associated if it is provided, as well as upholstery shells 25.

According to the preferred embodiment illustrated in the attached figures, as shown particularly in Fig. 3, the quick-release coupling means 31, 41 are interposed between said beam 11 and said seat portion 21a, 22a.

Preferably, the aforesaid quick-release coupling means comprise, for each of said one or more seats 21, 22, a plurality of pairs of mutually couplable connection elements 31, 41. A first element 31 of each pair is integral with the seat 21, 22 and a second element 41 of each pair is integral with the base 10 and are mutually interfacing with each other when the seat 21, 22 is positioned on the beam 11 for the anchoring.

According to a preferred embodiment shown in the attached figures, one element of each pair of mutually coupling connecting elements consists of a coupling seat 31, while the other element of each pair consists of an elastically retractable pin 41.

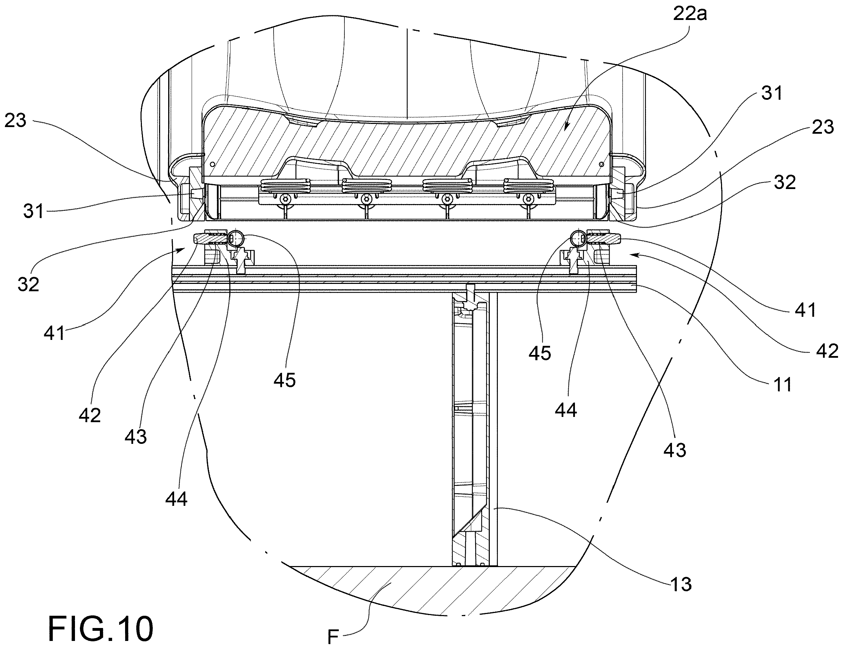

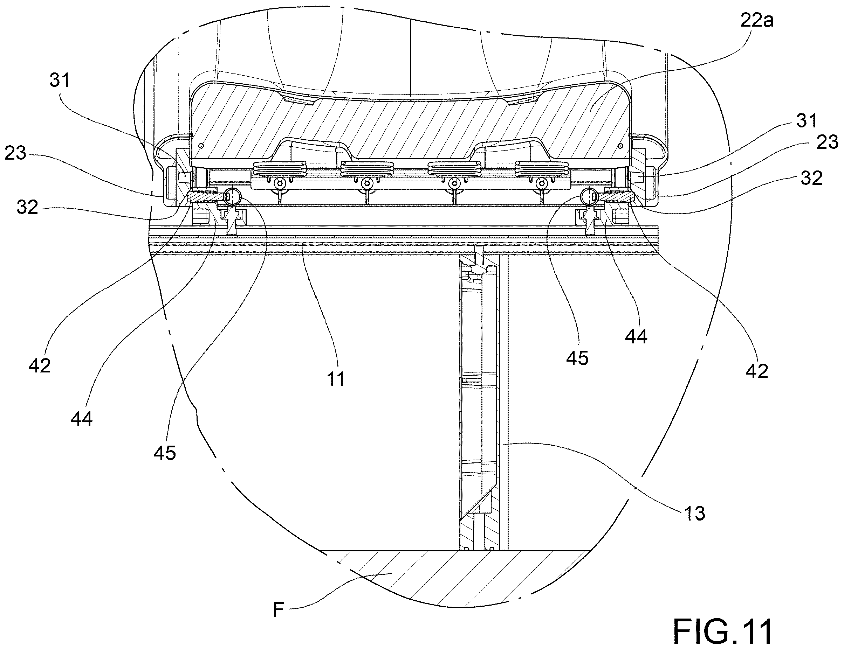

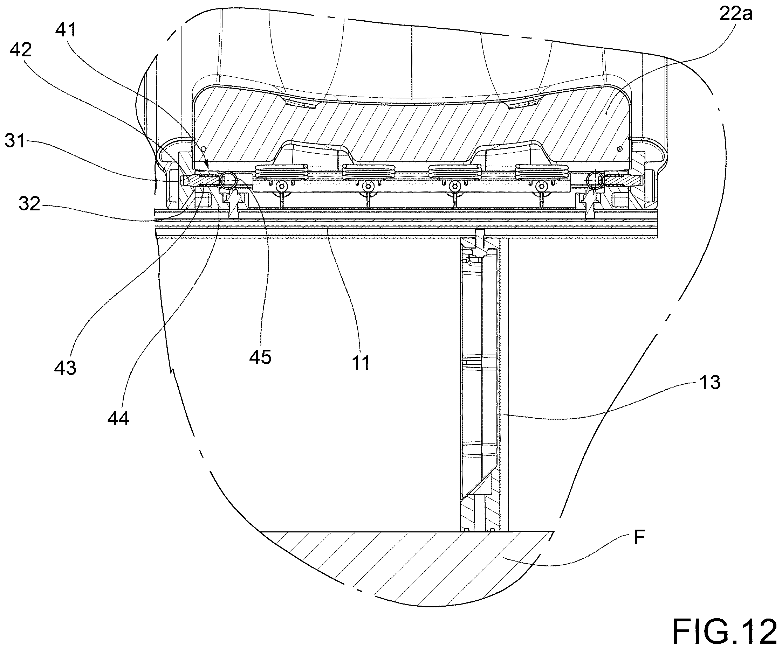

More specifically, as shown in particular in Fig. 12, said elastically retractable pin 41 comprises a head portion 42 which is counter-shaped with respect to said coupling seat 31 and is movable between an extracted position (see Fig. 10 and 12), in which the elastically retractable pin 41 is engageable in the coupling seat 31 with said head portion 42, and a retracted position (see Fig. 11), in which the elastically retractable pin 41 is disengageable from the coupling seat with said head portion 42.

Preferably, each elastically retractable pin 41 is automatically held in said extracted position by elastic means 43 and may reach said retracted position only if subjected to a traction opposite to the thrust exerted by said elastic means 43.

Advantageously, the coupling seats 31 of all the pairs of mutually couplable connection elements of each seat 21, 22 are axially centered with the respective elastically retractable pins 41 in a predetermined anchoring position between the seat 21, 22 and the base 10.

Advantageously, the coupling seats 31 are axially positioned to be parallel to a transverse axis Y of the seat 21a, 22a.

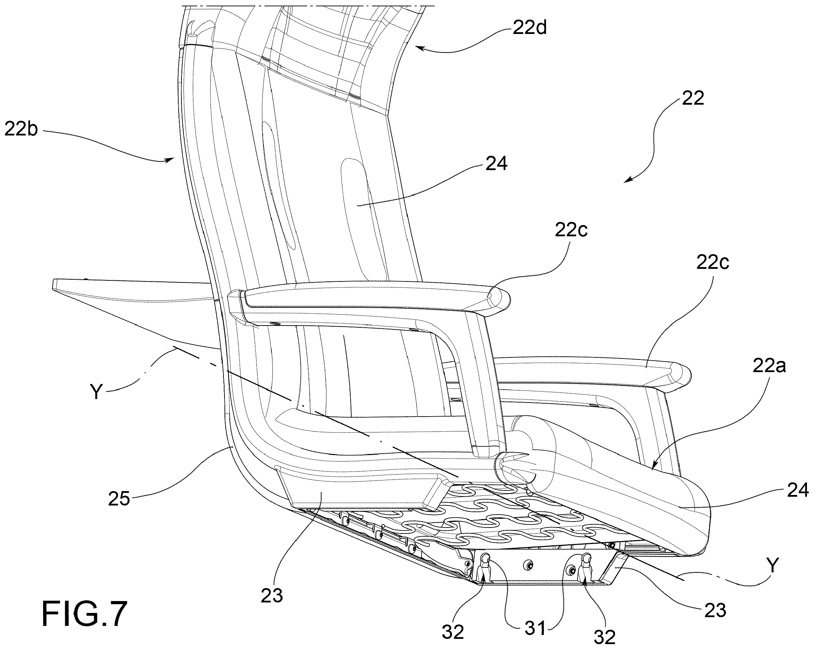

According to a preferred embodiment shown in the attached figures, illustrated in particular in Fig. 6 and 7, the seating system 1 comprises, for each retractable pin 41, a lead-in seat 32, which is arranged near the respective coupling seat 31 and is suitable - during an approaching movement of the seat to the base towards said anchoring position - to engage the respective retractable pin 41 (at the respective head portion 42), bringing it from said extracted position to said retracted position at the respective coupling seat 31; once said coupling seat is reached, the elastic means 43 are once again free to intervene by returning the elastically retractable pin 41 to said extracted position within the coupling seat 31 (see sequence of Fig. 10, 11 and 12).

Specifically, as shown in Fig. 7, each lead-in seat 32 is defined as a ramp.

Preferably, the coupling seat 31 defines the first element of each pair and is obtained on said seat 21, 22, while said elastically retractable pin 41 defines the second element of each pair and is integral with the base 10. The lead-in seat 32 is obtained on said seat 21, 22.

Alternatively, the coupling seat 31 may define the second element of each pair and be obtained on said base 10, while the elastically retractable pin 41 may define the first element of each pair and be integral with the seat 21, 22. In such case, the lead-in seat 32 is obtained on said base 10.

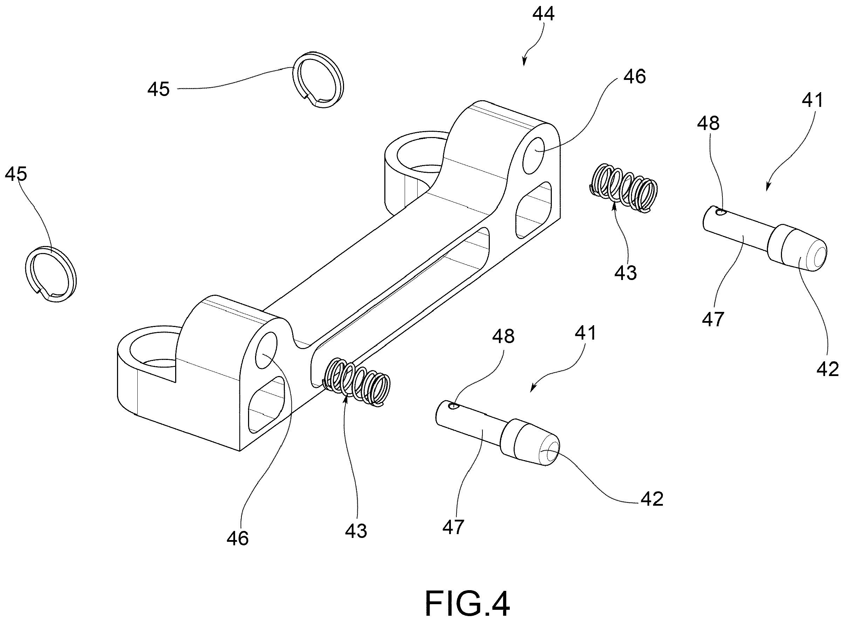

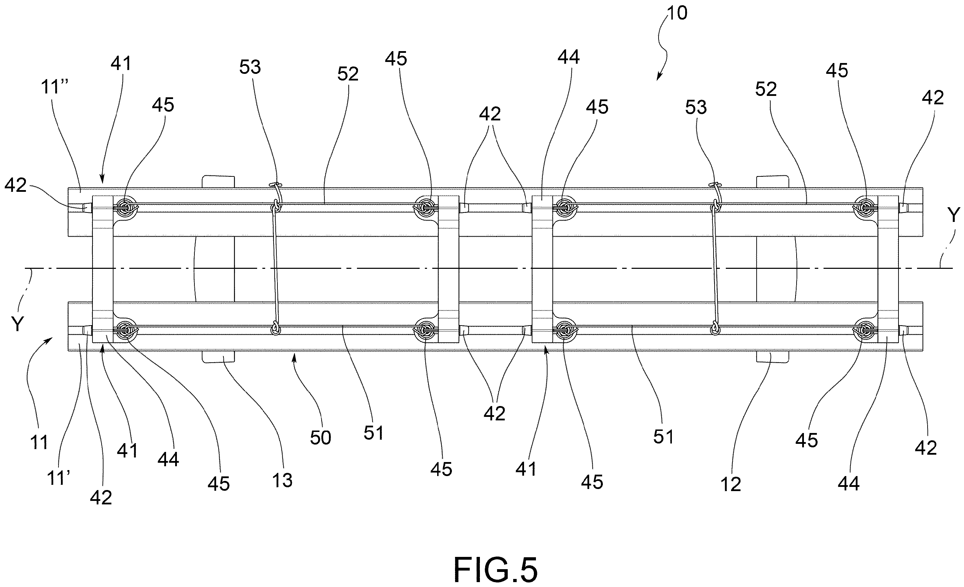

Advantageously, as shown in detail in Fig. 4 and 5, each elastically retractable pin 41 is slidably supported between said retracted position and said extracted position by a support structure 44, which in turn is anchored to said base 10.

As shown in detail specifically in Fig. 4, the support structure 44 comprises, for each retractable pin 41, a through-hole 46 that defines the sliding seat for said pin. Inside said through-hole 46 the elastic means 43 are inserted, which specifically consist of a spring. The pin 41 comprises a sliding portion 47 that is inserted into the sliding seat 46 and has a smaller cross section than the head portion 42. The sliding portion 47 is sized to protrude with respect to the sliding seat 46 in a position opposite to the head portion 42.

Advantageously, each elastically retractable pin 41 has an end-stroke portion 45 axially opposite to said head portion 42. This end-stroke portion 45 is obtained at the protruding portion of the pin opposite to the head portion 42. In particular, the end-stroke portion 45 may consist of a ring inserted into a hole 48 obtained in the sliding portion 47.

Operationally, the end-stroke portion 45 is configured to abut against said support structure 44 so as to limit the excursion of the head portion 42 from said retracted position to said extracted position by opposing the thrust of the elastic means 43.

Advantageously, as shown in Fig. 5, elastically retractable pins 41 are aligned axially parallel to the transverse direction Y of the seat portion of said one or more seats 21, 22. This transverse direction Y coincides with the direction of longitudinal development of the beam 11.

Preferably, as shown in Fig. 5, the elastically retractable pins 41, which are operationally associated with the same seat 21, 22, may all be connected together by a control device 50 at their respective end-stroke portions 45. Said control device 50 is operable so as to simultaneously apply, on each elastically retractable pin 41, an axial traction which is opposite to that exerted by the respective elastic means 43, so as to bring all the elastically retractable pins 41 from said extracted position to said retracted position.

Operationally, said control device 50 is useful for facilitating the disassembly operations of each seat from the base 11. In fact, by operating this control device 50, all retractable pins are brought into the extracted position, allowing for easy and immediate release of the seat from the base.

Advantageously as illustrated in Fig. 5, said control device 50 may comprise:
- a system of cables 51, 52 connecting the elastically retractable pins 41 at the respective end-stroke portions 45; and
- an actuating element 53 which is mechanically connected to said cable system 51, 52 so that a movement imposed on said actuating element 53 is transformed by said cable system 51, 52 into axial tractions on each of said elastically retractable pins 41.

Preferably, as shown particularly in Fig. 12, the head portion 42 and the coupling seat 31 are frustoconical. The tapering of the head portion 42 of each retractable pin 41 of the respective coupling seat ensures that, in the anchoring position, the retractable pin 41 may wedge into the coupling seat 31, canceling the play in the assembly between the seat 21, 22 and base 10. This ensures high stability in anchoring the seat to the base.

Preferably, the coupling seats 31 are positioned so that, in the anchoring position, once the retractable pins 41 have engaged their respective coupling seats 31, the seat portion of the seat is resting against the beam 11 of the base. In this way, the weight of the seat and that of any passenger is discharged directly from the seat to the beam, avoiding overloading of the retractable pins, which then have solely the function of anchoring the seat to the beam and supporting the static weight loaded on said seat.

The subject of the present invention is a transport means comprising a plurality of seating systems anchored to the floor and/or to a wall of said transport means.

Said seating systems are seating systems 1 according to the invention and in particular as described above.

Preferably the transport means is a means of public transport, in particular a train, a subway, a tram, a bus, a coach, or an airplane.

The subject of the present invention is a method for installing a seating system on a transport means.

The installation method comprises the following operating steps:
a) providing a seating system 1 according to the invention, and in particular as described above;
b) anchoring the base 10 of said seating system 1 to the floor and/or to a wall of said transport means without the respective one or more seats 21, 22;
c) fixing said one or more seats 21, 22 to said base 10 by means of said quick-release coupling means 31, 41 after the base 10 has been anchored to the floor F and/or to a wall of said transport means.

Preferably, when setting up the car, the first operation is to transport and assemble all the bases. Once this operation is completed, all the seats are assembled.

In the case of single-seat seating systems, there are only two modules: a base and a seat.

In the case of a three-seat seating system, there will be four modules: a base and three seats.

According to the preferred embodiment of the invention shown in the attached figures, the mounting of each seat to the base provides for the seat to be lowered vertically onto the beam and automatically attached via the quick-release coupling means, as illustrated in the sequence of Fig. 10 to 12.

The invention allows numerous advantages to be obtained, which have already been described in part.

The seating system 1 installable on transport means according to the invention allows for easier transport and installation with respect to similar seating systems without compromising the anchoring stability of the seats to the base.

The benefits achievable with the seating system 1 according to the invention are:
- Reducing the weight of modules that need to be moved. Traditionally, handling a complete, two-seat seating system requires multiple operators and possibly special trolleys because the total weight exceeds the maximum weight that may be carried by a single person. Breaking apart into smaller modules results in objects which weigh less than 25 kg and are therefore liftable and transportable by the individual operator.
- Reducing the volume of individual modules that need to be transported within the car. In the transition from the container, box or rack to the inside of the car, doors and aisles must be passed through. Reducing the volume of the objects to be carried reduces the complexity of handling and the risk of ruining the seat or surrounding items while passing through.
- Reduced transport costs, given the smaller footprint of the finished products. Shipping is normally managed in containers or boxes, thus having a fixed volume to fill. By handling smaller components, volume occupancy may be optimized.
- Reduced storage costs. Lower volume of components also means less space occupied and thus lower storage costs. Less space is required for the same number of assembled seats.
- Accessibility of fasteners and electrical connections in the car. At present, during the assembly of the seat in the car, said seat is placed close to the wall, an operator holds it in place and another operator screws the fastening screws to the wall and floor. After it has been mechanically fastened, electrical connections are made. Usually the connectors are placed under the beam near the wall, in an area hidden from the rest of the seat. If these mechanical and electrical fastening operations are performed with only the base installed, thus without the seat structures, the visual obstruction and bulk is less; consequently, the operation is facilitated. This facilitation reduces the time and thus the cost of the activity.
- Ease of maintenance activities. In cases where maintenance involving the replacement of structural components of the seat needs to be done, it is possible to disassemble the seat structure affected by the intervention, transport it outside the car, and perform the activity in an area with more space and without the risk of damaging surrounding objects.

Lastly, the seating system 1 installable on transport means according to the invention is simple and cost-effective.

The invention thus conceived therefore achieves its intended objects.

Obviously, in practice it may also assume different forms and configurations from the one illustrated above, without thereby departing from the present scope of protection.

Furthermore, all details may be replaced with technically equivalent elements, and the dimensions, shapes, and materials used may be any according to the needs.

## Claims

1. Seating system (1) installable on transport means comprising
- a base (10) intended to be anchored to the transport means at the floor and/or a wall of the means itself;
- one or more seats (21, 22) which can in turn be anchored to the base (10) by connection means (31, 41) interposed between the base (10) and each of said one or more seats (21, 22),
**characterized in that** said connection means are quick-release coupling means (31, 41).

2. Seating system (1) according to claim 1, wherein said base (10) comprises a beam (11) intended in use to be arranged horizontally so as to define a horizontal support plane for said one or more seats (21, 22) and wherein each of said one or more seats (21, 22) comprises at least one seating portion (21a, 22a) at which said seat can be anchored to said beam (11), said quick-release coupling means (31, 41) being interposed between said beam (11) and said seating portion (21a, 22a).

3. Seating system (1) according to claim 1 or 2, wherein said quick-release coupling means comprise for each of said one or more seats (21, 22) a plurality of pairs of mutually couplable connection elements (31, 41) and wherein a first element (31) of each pair is integral with the seat (21, 22) and a second element (41) of each pair is integral with the base (10).

4. Seating system (1) according to claim 3, wherein one element of each pair of mutually couplable connection elements consists of a coupling seat (31), while the other element of each pair consists of an elastically retractable pin (41), and wherein said elastically retractable pin (41) comprises a head portion (42) which is counter-shaped with respect to said coupling seat (31) and is movable between an extracted position, in which the elastically retractable pin (41) is engageable in the coupling seat with said head portion (42), and a retracted position, in which the elastically retractable pin (41) is disengageable from the coupling seat with said head portion (42).

5. Seating system (1) according to claim 4, wherein each elastically retractable pin (41) is automatically held in said extracted position by elastic means (43) and can reach said retracted position only if subjected to a traction opposite the thrust exerted by said elastic means (43).

6. Seating system (1) according to claim 5, wherein the coupling seats (31) of all the pairs of mutually couplable connection elements of each seat are axially centered with the respective elastically retractable pins (41) in a predetermined anchoring position between the seat (21, 22) and the base (10).

7. Seating system (1) according to claim 6, comprising for each retractable pin (41) a lead-in seat (32) which is arranged near the respective coupling seat (31) and is suitable - during an approaching movement of the seat to the base towards said anchoring position - to engage the respective retractable pin (41), bringing it from said extracted position to said retracted position at the respective coupling seat (31), once reached which the elastic means (43) are again free to intervene by returning the elastically retractable pin (41) to said extracted position within the coupling seat (31).

8. Seating system (1) according to any one of claims 3 to 7, wherein said coupling seat (31) defines the first element of each pair and is obtained on said seat (21, 22), while said elastically retractable pin (41) defines the second element of each pair and is integral with the base (10).

9. Seating system (1) according to claim 8 when dependent on claim 7, wherein said lead-in seat (32) is obtained on said seat (21, 22).

10. Seating system (1) according to claim 8 or 9, wherein each elastically retractable pin (41) is slidably supported between said retracted position and said extracted position by a support structure (44) which in turn is anchored to said base (10).

11. Seating system (1) according to claim 10, wherein each elastically retractable pin (41) is provided with an end-stroke portion (45) axially opposite said head portion (42), said end-stroke portion (45) being configured to abut against said support structure (44) so as to limit the excursion of the head portion (42) from said retracted position to said extracted position by opposing the thrust of the elastic means (43).

12. Seating system (1) according to claim 11, wherein the elastically retractable pins (41), which are operatively associated with the same seat (21, 22), are all connected to each other by a control device (50) at the respective end-stroke portions (45) and wherein said control device (50) is operable so as to simultaneously apply on each elastically retractable pin (41) an axial traction which is opposite that exerted by the respective elastic means (43) so as to bring all the elastically retractable pins (41) from said extracted position to said retracted position.

13. Seating system (1) according to claim 12, wherein said control device (50) comprises:
- a system of cables (51, 52) connecting the elastically retractable pins (41) at the respective end-stroke portions (45); and
- an actuating element (53) which is mechanically connected to said cable system (51,52) so that a movement imposed on said actuating element (53) is transformed by said cable system (51, 52) into axial tractions on each of said elastically retractable pins (41).

14. Seating system (1) according to any one of claims 4 to 13, wherein said head portion (42) and said coupling seat (31) are frustoconical.

15. Transport means comprising a plurality of seating systems anchored to the floor and/or to a wall of said transport means, **characterized in that** said seating systems are seating systems (1) according to any one of the preceding claims, preferably said transport means being a means of public transport, in particular a train, a subway, a tram, a bus, a coach or an airplane.

16. Method for installing a seating system on a transport means, comprising the following operating steps:
a) providing a seating system (1) according to any one of claims 1 to 14;
b) anchoring the base (10) of said seating system (1) to the floor and/or to a wall of said transport means without the respective one or more seats (21, 22);
c) fixing said one or more seats (21, 22) to said base (10) by means of said quick-release coupling means (31, 41) after the base (10) has been anchored to the floor and/or to a wall of said transport means.
